# EUROPÄISCHE PATENTSCHRIFT

(11) **EP 2 253 816 B1**
(45) Veröffentlichungstag und Bekanntmachung des Hinweises auf die Patenterteilung: **10.02.2016**
(21) Anmeldenummer: 09006827.1
(22) Anmeldetag: 20.05.2009
(51) Int. Cl.: F02B 37/18, F16C 33/74, F02D 9/06, F16J 15/18, F16J 15/36

(54) **Drehdurchführung mit geringer Gasdurchlässigkeit**
Rotary transmission leadthrough with low gas permeability
Passage tournant doté d'une perméabilité réduite au gaz

(43) Veröffentlichungstag der Anmeldung: 24.11.2010
(73) Patentinhaber: ElringKlinger AG, 72581 Dettingen (DE)
(72) Erfinder: Spreidler, Dieter, 82393 Iffeldorf (DE); Nussko, Marina, 68167 Mannheim (DE); Curth, Christian, 82377 Penzberg (DE); Meincke, Michael, 82515 Wolfratshausen (DE); Lanziner, Arthur, 69469 Weinheim (DE); Nahrwold, Olaf, 67071 Ludwigshafen (DE); Brenndörfer, Reinhard, 82538 Geretsried (DE); Simon, Clemens, 82362 Weilheim (DE); Vogt, Christian, 82057 Icking (DE); Feigl, Peter, 82335 Höhenrain (DE); Lederer, Andreas, 80993 München (DE); Klenk, Thomas, 69221 Dossenheim (DE)
(74) Vertreter: Hoeger, Stellrecht & Partner Patentanwälte mbB

(56) Entgegenhaltungen:
- EP-A1- 1 522 691
- DE-B- 1 110 947
- FR-A1- 2 444 794
- FR-A1- 2 777 946
- FR-A1- 2 915 262
- FR-A5- 2 058 830
- JP-A- 11 166 428
- NL-C- 49 505
- US-A- 2 172 325
- US-A- 2 326 268

## Beschreibung

### Technisches Gebiet

Die Erfindung betrifft eine Drehdurchführung gemäß dem Oberbegriff des Patentanspruchs 1.

### Stand der Technik

Aus der EP 1 522 691 A1, die eine gattungsbildende Drehdurchführung offenbart, ist ein Dichtungssystem für einen Turbolader bekannt. Die FR 2 444 794 A1 zeigt einen Absperrkörper für ein Auspuffrohr. Aus der JP 11166428 A ist eine Lagerbuchse bekannt, die eine rotierende Welle aufnimmt. Die FR 2 777 946 A1 zeigt ein Bremsmittel, welches einem Turbokompressor zugeordnet ist. Die FR 2 915 262 A1 zeigt einen Balg aus Metall. Aus der FR 2 058 830 A5 ist bekannt, Dichtungen aus mit Bornitrid imprägnierten Fasern in Kolben einzusetzen. Die DE 1 110 947 B zeigt eine Motorbremse mit einer scheibenförmigen Auspuffklappe. Aus der US 2 326 268 A sind Dichtringe aus Flachs bekannt. Die US 2 172 325 A offenbart Packungen aus synthetischem Gummi. Aus der NL 49 505 C ist eine Dichtung bekannt, die Gummi- und Metallscheiben aufweist.

Aus der WO 2005/008041 A1 ist eine Drehdurchführung bekannt, die zur Betätigung einer Wastegatekiappe dient. In einem Turbolader werden Abgase verwendet, um ein Turbinenrad anzutreiben. Die Rotationsgeschwindigkeit des Turbinenrads kann kontrolliert werden, indem sogenannte Wastegateklappen geöffnet werden, sodass Abgase entweichen. Das Entweichen der Abgase führt zu einem Druckverlust innerhalb eines Raums, in dem das Turbinenrad rotiert. Die Temperatur der entweichenden Abgase kann über 1000°C betragen. Sie werden in einem weiteren Raum gesammelt, um einer Abgasbehandlung unterworfen zu werden.

Bei der Verwendung von Wastegateklappen ist stets dafür Sorge zu tragen, dass keine Abgase durch Spalte zwischen der Verstellwelle und dem Lager entweichen. Hierzu schlägt die WO 2005/008041 A1 vor, an der kälteren Seite der Verstellwelle ein Federelement anzuordnen, welches Spaltbildung und Verschleiß einer keramischen Dichtung kompensiert.

Bei dieser Drehdurchführung ist nachteilig, dass eine keramische Dichtung zum Einsatz kommt, welche bei Vibrationen oder Kippbewegungen zur Spaltbildung neigt. Die keramische Dichtung liegt nämlich planparallel an einer ebenen Dichtfläche an, wobei die Dichtung bei auftretenden Vibrationen in Ihrer Gesamtheit relativ zur Dichtfläche bewegt wird und dadurch Spalte erzeugt.

Um dem zu begegnen, muss die keramische Dichtung durch das Federelement dauerhaft sehr stark gegen die Welle gepresst werden. Hiermit geht eine Abnutzung der Dichtung und eine Schwergängigkeit der Verstellwelle einher. Insbesondere muss bei der Fertigung der Drehdurchführung dafür Sorge getragen werden, dass die Federkraft stets ausreichend ist, um den jeweiligen Abnutzungsgrad der keramischen Dichtung und die Spaltbildung geeignet auszugleichen. Zudem werden bei einer einzelnen scheibenförmigen keramischen Dichtung sehr hohe Anforderungen an die Oberflächengüte und damit an die Fertigungsgenauigkeit gestellt, da selbst durch kleinste Spalte oder Unebenheiten sehr viel Gas entweichen kann.

### Darstellung der Erfindung

Der Erfindung liegt daher die Aufgabe zugrunde, eine Drehdurchführung der eingangs genannten Art derart auszugestalten und weiterzubilden, dass diese bei einfachem Aufbau eine dauerhaft hohe Dichtheit gegen Abgase zeigt.

Die vorliegende Erfindung löst die zuvor genannte Aufgabe durch die Merkmale des Patentanspruchs 1.

Es ist zunächst erkannt worden, dass eine gekapselt aufgenommene Dichteinrichtung vom Lager und der Versteilwelle eingeschlossen ist und nicht mit der Atmosphäre in Verbindung steht. Insbesondere ist erkannt worden, dass derart aufgenommene Dichteinrichtungen kleinere sich ausbildende Spalte verschließen können, so dass keine Abgase entweichen. Eine gekapselt aufgenommene Dichteinrichtung wirkt bei erhöhten Abgasdrücken selbstdichtend, da die Abgase die Dichteinrichtung gegen eine Dichtfläche pressen können, ohne, dass die Dichteinrichtung in die Atmosphäre oder einen Ausweichraum ausweichen kann. Weiter ist erkannt worden, dass eine solche Dichteinrichtung, ein Lager und eine Verstellwelle als vorgefertigte Montageeinheit geliefert werden kann, so dass Fehler bei der Endmontage weitgehend vermindert werden. Hierdurch werden undichte Stellen aufgrund fehlerhafter Einstellungen einer Feder wirksam vermieden.

Die Dichteinrichtung weist erfindungsgemäß Lamellen auf, die in Reihe angeordnet sind. Lamellen können axial in Reihe angeordnet sein und die Verstellwelle umgeben. Scheibenförmige Lamellen können mit ihren Spitzen dichtend an der Verstellwelle anliegen. Vor diesem Hintergrund ist denkbar, dass die Lamellen aus Metall gestanzt sind. Diese konkrete Ausgestaltung erlaubt eine problemlose Einstellung der Anzahl der Lamellen, die in einem Lager aufgenommen werden.

Die Dichteindchtung weist erfindungsgemäß erste Lamellen auf, die im Querschnitt doppelt kegelstumpfförmig ausgebildet sind, und zweite Lamellen auf, die im Querschnitt U-förmig ausgebildet sind, wobei die Lamellen abwechselnd angeordnet sind. Die Verwendung doppelt kegelstumpfförmig ausgebildeter, erster Lamellen erlaubt, dass Dichtlippen ausgebildet werden, welche die Verstellwelle umgreifen und an dieser mit ihrer Spitze anliegen. Die Verwendung zweiter Lamellen, die im Querschnitt U-förmig ausgebildet sind, erlaubt, die doppelt kegelstumpfförmig ausgebildeten Lamellen derart zu verpressen, dass deren Dichtlippen an der Verstellwelle zur Anlage kommen.

Die Lamellen umgreifen die Verstellwelle und sind von der Verstellwelle und dem Lager verpresst, gemäß der Erfindung, wobei ein Teil der Lamellen Dichtlippen ausbildet. Durch diese Ausgestaltung wird eine Hintereinanderschaltung von mehreren Dichtlippen realisiert. Die Verwendung metallischer Lamellen realisiert eine hohe Temperaturbeständigkeit der Drehdurchführung.

Folglich ist die eingangs genannte Aufgabe gelöst.

Die Dichteinrichtung könnte federnde Eigenschaften zeigen. Hierdurch kann die Dichteinrichtung selbstdichtend wirken und selbständig Spalte verringern. Es besteht nämlich eine Proportionalität zwischen der Leckagerate (Liter/sec) und dem Produkt aus der dritten Potenz der Spaltbreite und der Druckdifferenz zwischen den gegeneinander abzudichtenden Räumen. Eine Verkleinerung der Spaltbreite reduziert daher die Leckagerate sehr viel mehr, als eine Verminderung der Druckdifferenz.

Die Dichteinrichtung könnte einen Vliesstoff aufweisen. Überraschend und unerwartet hat sich gezeigt, dass ein Vliesstoff aufgrund seiner Porosität hervorragende elastische und federnde Eigenschaften zeigt und für Dichtungszwecke einsetzbar ist. Der Vliesstoff kann zur Verbesserung seiner Stabilität mit einem Metallgitter verstärkt werden.

Die Dichteinrichtung könnte einen zumindest teilweise aus mineralischen Stoffen bestehenden Vliesstoff aufweisen. Ein mineralischer Vliesstoff der hier beschriebenen Art ist vorzugsweise auf Basis eines Glasfaservlieses oder Kohlefaservlies eines Flächengewichts von 20 - 200 g/m² gefertigt, welches mit Bornitrid imprägniert wurde. Der mit Bomitrid imprägnierte mineralische Vliesstoff weist dann ein Flächengewicht von 30 - 2000 g/m² auf. Es kann jedoch auch zur Herstellung eines mineralischen Vliesstoffes ein Vlies aus Kieselsäure mit Bornitrid getränkt und dadurch imprägniert werden. Vliese, die aus Kieselsäure gefertigt und mit Bornitrid imprägniert sind, zeigen eine Temperaturstabilität bis weit über 1200° C. Vor diesem Hintergrund ist denkbar, den mineralischen Vliesstoff mit weiteren Füllstoffen, insbesondere mit mineralischen Füllstoffen, zu versehen. Hierdurch wird die Temperaturstabilität und mechanische Belastbarkeit weiter erhöht

Die Dichteinrichtung könnte einen Vliesstoff aufweisen, der mit Bomitrid imprägniert ist. Es hat sich gezeigt, dass ein mineralischer Vliesstoff durch die Imprägnierung mit Bornitrid selbst sehr hohen Temperaturen von bis zu 1000°C standhalten kann. Vor diesem Hintergrund sei auf die DE 102 50 264 A1 verwiesen, in welcher die Imprägnierung von Vliesstoffen mit Bomitrid beschrieben ist.

Die Dichteinrichtung könnte als Dichtring, insbesondere aus imprägniertem Vliesstoff, ausgestaltet sein. Ein Dichtring kann problemlos als Einzelteil in ein Lager eingesetzt werden. Hierdurch ergeben sich Montagevorteile.

Der Dichtring könnte mindestens eine konisch verlaufende Dichtfläche aufweisen, welche an der Verstellwelle oder an der Wandung des Lagers anliegt. Durch eine konisch verlaufende Dichtfläche kann der Dichtring an einer kegelstumpfförmigen Fläche der Verstellwelle gleiten. Spaltbildungen durch Vibrationen werden hierdurch vermieden, da der Dichtring durch die konische Fläche zwangsgeführt ist.

Der Dichtring könnte eine erste konisch verlaufende Dichtfläche aufweisen, die an der Verstellwelle anliegt, und eine zweite konisch verlaufende Dichtfläche aufweisen, die an einer Wandung des Lagers anliegt. Durch diese konkrete Ausgestaltung kann die erste konisch verlaufende Dichtfläche an einem kegelstumpfförmigen Bereich der Verstellwelle anliegen, wobei die zweite Dichtfläche an einer konisch, vorzugsweise kegelstumpfförmig, verlaufenden Wandung des Lagers anliegt. Durch die doppelt konische Ausbildung des Dichtrings wird dieser besonders verschiebesicher und spaltfrei zwischen Verstellwelle und Lager aufgenommen.

Der Dichtring könnte im Querschnitt rechteckig ausgebildet sein. Diese konkrete Ausgestaltung erlaubt eine problemlose Fertigung des Dichtrings.

Die Dichteinrichtung könnte aus hintereinander angeordneten Dichtringen bestehen, wobei zwischen zwei Dichtringen jeweils eine Metallscheibe angeordnet ist. Hierdurch wird eine Art Labyrinthdichtung geschaffen, wobei sich die Dichtwirkungen der einzelnen Dichtringe gegenseitig verstärken und ergänzen.

Die Dichteinrichtung könnte axial aufeinander abfolgende Metallscheiben aufweisen, die jeweils mit Bornitrid beschichtet sind. Bomitrid wirkt reibungsvermindemd und abdichtend. Auf separate Dichtringe kann hierbei unter Ausbildung eines teilearmen Aufbaus verzichtet werden.

Vor diesem Hintergrund könnten zwei aufeinander folgende Metallscheiben abwechselnd an der Welle und am Lager drehfest befestigt sein. Hierdurch wird der Labyrintheffekt noch verstärkt. Des Weiteren können die Metallscheiben federnde Eigenschaften entfalten und selbstätig bei anstehenden Gasdrücken abdichtend wirken, indem sie sich in axialer Richtung zu benachbarten Metallscheiben ausrichten und dadurch Dichtringe verpressen.

Das Lager könnte als Radialwellendichtring ausgebildet sein. Ein Radialwellendichtring lässt sich besonders leicht auf eine Verstellwelle aufpressen, wobei die Dichtlippe eine sehr hohe Elastizität aufweist. Insbesondere kann eine Dichtlippe eines Radialwellendichtrings sehr leicht Bereiche unterschiedlichen Umfangs der Verstellwelle beim Aufpressen zerstörungsfrei passieren.

Das Lager könnte als Radialwellendichtring ausgebildet sein, wobei die Dichteinrichtung eine Dichtlippe aufweist, die aus imprägniertem Vliesstoff, insbesondere aus mineralischem Vliesstoff, gefertigt ist. Ein mineralischer Vliesstoff zeigt trotz ausreichender Elastizität eine sehr hohe mechanische Festigkeit und Temperaturstabilität.

Vor diesem Hintergrund ist denkbar, dass mehrere Dichtlippen in Reihe geschaltet sind. Hierdurch wird der Dichteffekt erhöht. Es wird vorteilhaft eine Art Labyrinthdichtung geschaffen, wobei Abnutzungserscheinungen an einer Dichtlippe von weiteren Dichtlippen kompensiert werden.

Die Dichteinrichtung könnte einen Faltenbalg umfassen, der an zumindest einem Ende einen Dichtring aufweist. Der Faltenbalgkönnte vorzugsweise aus Metall gefertigt sein. Ein Faltenbalg zeigt federnde Eigenschaften und presst sich aufgrund seiner Rückstellkraft entweder gegen die Verstellwelle oder gegen eine Wandung des Lagers.

Vor diesem Hintergrund ist denkbar, dass der Faltenbalg an beiden Enden einen Dichtring aufweist. Durch diese konkrete Ausgestaltung kann der Faltenbalg quasi als Einzelteil vom Lager und der Verstellwölle gehalten werden, wobei dieser lose zwischen Lager und Verstellwelle aufgenommen ist. Allein aufgrund seiner federnden Eigenschaften presst sich der Faltenbalg sowohl an die Verstellwelle und an das Lager und dichtet an beiden Anlagestellen ab.

Zumindest einige Lamellen könnten aus Vliesstoff bestehen und/ oder mit Bomitrid getränkt oder beschichtet sein. Die Tränkung mit Bomitrid erhöht die Temperaturstabilität der Lamellendichtung, die Ausgestaltung einzelner oder aller Lamellen aus Vliesstoff die Elastizität der Lamellendichtung. Es ist auch denkbar, dass in einer Dichteinrichtung mehrere Lamellen mit einer reibungsmindernden Schicht aus Bomitrid beschichtet und nebeneinander angeordnet sind. Die Lamellen können dabei auch einen kleinen Spalt ausbilden, der maximal 0,01 mm breit ist. Es besteht nämlich eine Proportionalität zwischen der Leckagerate (Liter/sec) und dem Produkt aus der dritten Potenz der Spaltbreite und der Druckdifferenz zwischen den gegeneinander abzudichtenden Räumen. Eine Verkleinerung der Spaltbreite reduziert daher die Leckagerate sehr viel mehr, als eine Verminderung der Druckdifferenz. Vor diesem Hintergrund können die Lamellen in axialer Richtung verpresst werden, so dass ein sehr kleiner Spalt entsteht. Die Einstellung eines axialen Mindestabstands der Lamellen erlaubt auch eine Reduzierung der Fertigungsgenauigkeiten. Dies ist für eine kostengünstige Großserienproduktion wichtig. Der Mindestabstand zwischen den Lamellen kann durch einen Abstandshalter kostengünstig eingestellt werden, der aufgeschmolzen oder verbrannt werden kann. Beispielsweise kann eine Papierlage als Abstandshalter furigieren.

Die hier beschriebene Drehdurchführung kann insbesondere zur Betätigung von Wastegateklappen verwendet werden. Hierdurch ist eine sehr dichte und stabile Drehdurchführung in einem Turbolader eines Kraftfahrzeuges einsetzbar.

Die Drehdurchführung kann zur Betätigung von Abgasrückführungsklappen oder Abgasklappen verwendet werden. Die Drehdurchführung kann zur Verstellung von variablen Turbinengeometrien (VTG) verwendet werden. Die Drehdurchführung kann in PKWs, LKW, oder im Kraftwerksbereich verwendet werden.

Es ist auch denkbar, die hier beschriebenen Dichtringe, Lamellen und Dichtlippen aus Keramik, Metall oder beschichteten Metallen zu fertigen.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen.

Mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Drehdurchführung, bei welcher die Dichteinrichtung auf der heißeren Seite angeordnet ist,
- Fig. 2: eine Drehdurchführung, bei welcher die Dichteinrichtung auf der kälteren Seite angeordnet ist,
- Fig. 3: eine Drehdurchführung, welche eine doppelt konisch ausgebildete Dichteinrichtung aufweist,
- Fig. 4: eine Drehdurchführung mit einem im Querschnitt rechteckigen Dichtring,
- Fig. 5: eine Drehdurchführung, bei welcher abwechselnd Metallscheiben und Dichtringe aus Vliesstoff hintereinander angeordnet sind,
- Fig. 6: eine Drehdurchführung, bei welcher das Lager als Radialwellendichtring ausgebildet ist,
- Fig. 7: eine Drehdurchführung, bei welcher der Radialwellendichtring mehrere Dichtlippen aufweist,
- Fig. 8: eine Drehdurchführung mit einem Faltenbalg,
- Fig. 9: eine Drehdurchführung mit einem Faltenbalg, der an der kälteren Seite am Lager befestigt ist,
- Fig. 10.: eine Drehdurchführung mit einem losen Faltenbalg, der zwischen Verstellwelle und Lager verpresst ist,
- Fig. 11: eine Drehdurchführung mit einem Faltenbalg, welcher an der Verstellwelle drehfest angelenkt ist,
- Fig. 12: eine erfindungsgemäße Drehdurchführung, deren Dichteinrichtung Lamellen aufweist,
- Fig. 13: die Drehdurchführung gemäß Fig. 12 in einer perspektivischen Ansicht,
- Fig. 14: eine Detailansicht der Dichteinrichtung gemäß den Figuren 12 und 13,
- Fig. 15: eine im Querschnitt U-förmige Lamelle und
- Fig. 16: eine im Querschnitt doppelt kegelstumpfförmige Lamelle.

### Ausführung der Erfindung

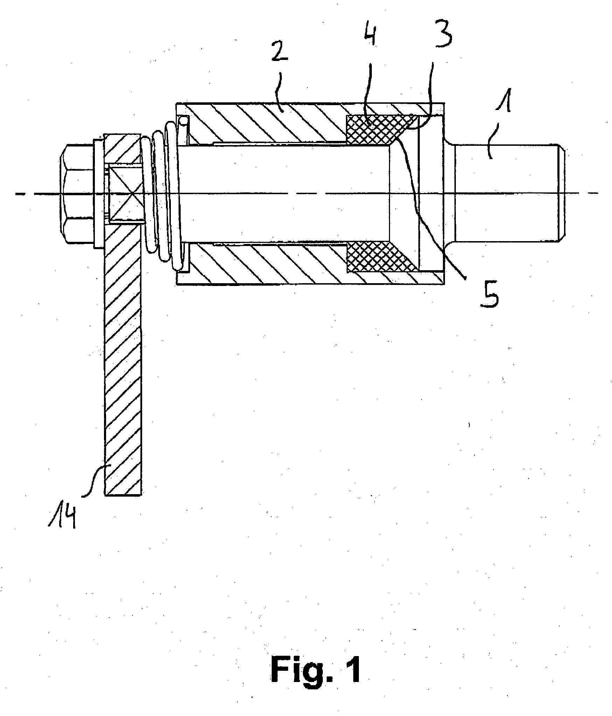

Fig. 1 zeigt eine Drehdurchführung für eine nicht gezeigte Wastegateklappe oder VTG-Verstellung umfassend eine Verstellwelle 1, welche mit einer Betätigungseinrichtung 14 und der nicht gezeigten Wastegateklappe kraftübertragend verbunden ist. Die Verstellwelle 1 ist in einem Lager 2 gelagert, wobei zwischen dem Lager 2 und der Verstellwelle 1 mindestens ein abzudichtender Spalt 3 ausgebildet ist. Der abzudichtende Spalt 3 ist durch eine Dichteinrichtung 4 abgedichtet, die gekapselt im Lager 2 aufgenommen ist

Die Dichteinrichtung 4 ist als Dichtring aus imprägniertern Vliesstoff ausgestaltet. Der Vliesstoff ist mit Bornitrid imprägniert. Der Dichtring weist eine konisch verlaufende Dichtfläche 5 auf, welche an der Verstellwelle 1 anliegt. Die Dichteinrichtung 4 ist an der heißeren Seite des Lagers 2 angeordnet, die der nicht gezeigten Wastegateklappe zugewandt ist.

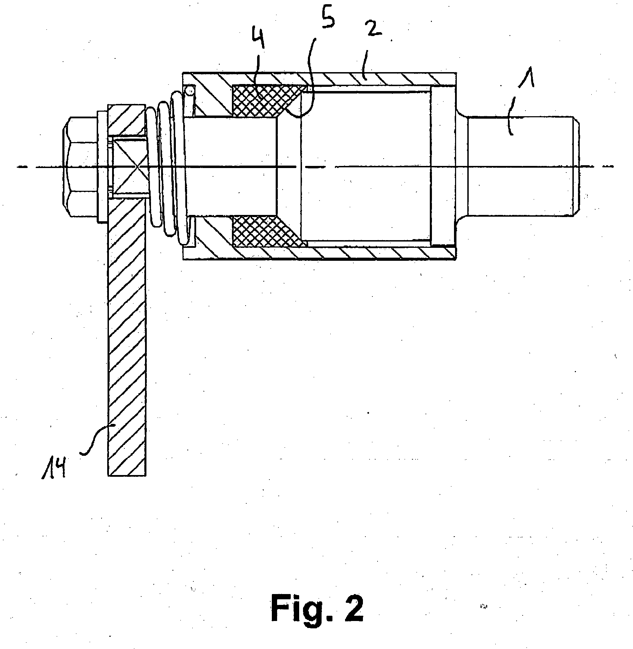

Fig. 2 zeigt eine Drehdurchführung, die einen analogen Aufbau zur Drehdurchführung gemäß Fig. 1 zeigt. Die Dichteinrichtung 4 mit konisch verlaufender Dichtfläche 5 ist in Fig. 2 an der kälteren Seite, nämlich der nicht gezeigten Wastegateklappe abgewandt, angeordnet.

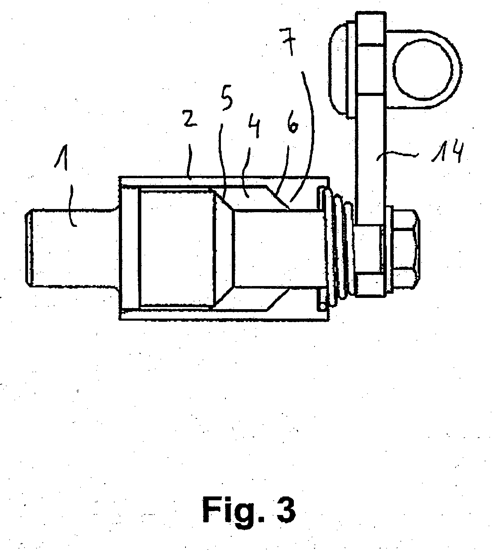

Fig. 3 zeigt eine Drehdurchführung, bei welcher die Dichteinrichtung 4 aus imprägniertem Vliesstoff gefertigt ist. Die Dichteinrichtung 4 ist als Dichtring ausgestaltet, der eine erste konisch verlaufende Dichtfläche 5 aufweist, die an der Verstellwelle 1 anliegt. Der Dichtring weist eine zweite konisch verlaufende Dichtfläche 6 auf, die an einer Wandung 7 des Lagers 4 anliegt.

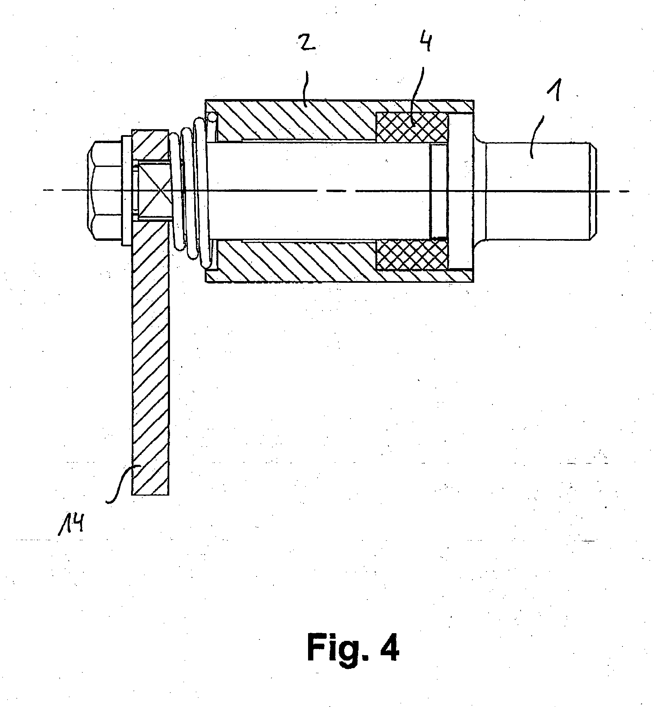

Fig. 4 zeigt eine Drehdurchführung mit im Wesentlichen analogem Aufbau zu den Drehdurchführungen gemäß Fig. 1 und Fig. 2, wobei die Dichteinrichtung 4 als im Querschnitt rechteckiger Dichtring ausgestaltet ist. Die Dichteinrichtung 4 ist als imprägnierter Vliesstoff ausgestaltet und auf der heisseren Seite des Lagers 2 angeordnet.

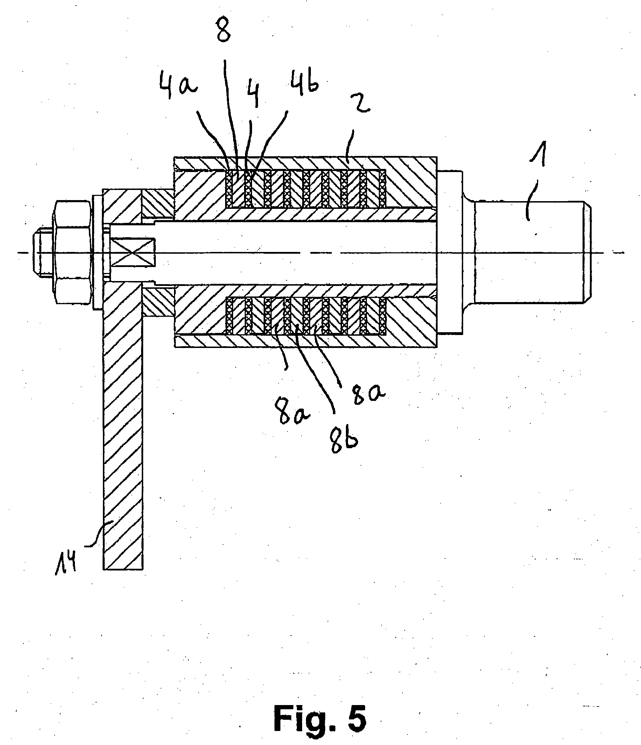

Fig. 5 zeigt eine Drehdurchführung, bei welcher die Dichteinrichtung 4 aus hintereinander angeordneten Dichtringen 4a, 4b besteht, wobei zwischen zwei Dichtringen 4a, 4b jeweils eine Metallscheibe 8 angeordnet ist. Die Metallscheibe 8 verpresst die Dichtringe 4a, 4b, welche aus mit Bornitrid imprägniertem Vliesstoff gefertigt sind. Dabei ist auch denkbar, die Metallscheiben 8 selbst mit Bomitrid zu beschichten und auf die Dichtringe 4a, 4b zu verzichten. Zwei aufeinander folgende Metallscheiben 8a, 8b sind abwechselnd an der Verstellwelle 1 und am Lager 4 drehfest befestigt.

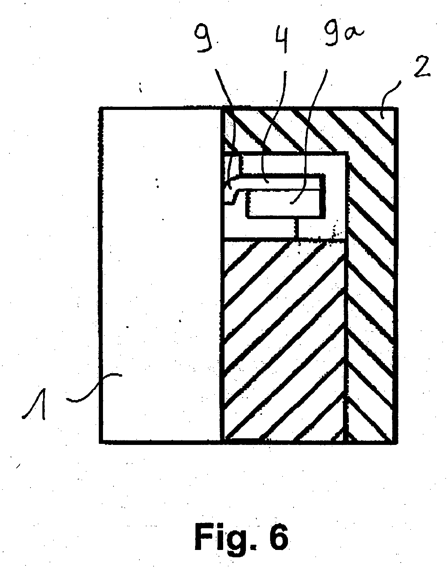

Fig. 6 zeigt eine Drehdurchführung, bei welcher das Lager 2 als Radialwellendichtring ausgebildet ist. Die Dichteinrichtung 4 weist eine Dichtlippe 9 auf, die aus imprägniertem Vliesstoff gefertigt ist.

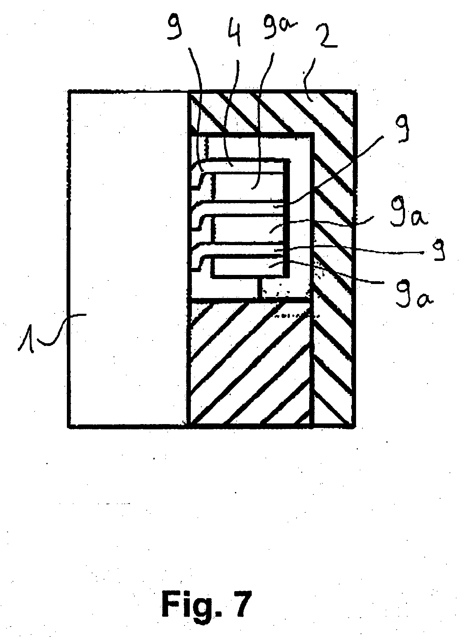

Fig. 7 zeigt eine Drehdurchführung mit einem Lager 2, welches als Radialwellendichtring ausgestaltet ist. Der Radialwellendichtring weist als Dichteinrichtung 4 mehrere hintereinander geschaltete Dichtlippen 9 auf, die voneinander durch Abstandsscheiben 9a getrennt sind. Die Abstandsscheiben 9a verpressen die Dichtlippen 9 im Lager 2.

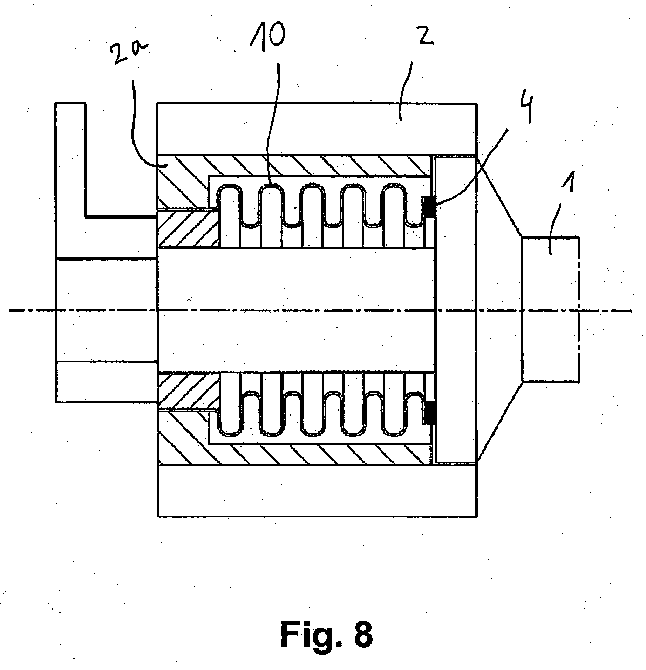

Fig. 8 zeigt eine Drehdurchführung mit einer Dichtungseinrichtung 4, der ein Faltenbalg 10 zugeordnet ist. Die Dichtungseinrichtung 4 weist einen Dichtring auf, welcher an der Verstellwelle 1 anliegt. Der Dichtring ist an einem Ende des Faltenbalgs 10 angeordnet, welches der heißeren Seite des Lagers 2 zugewandt ist. Der Faltenbalg 10 ist drehfest mit dem Lager 2 verbunden. Eine erste Lagerhülse 2a kann dabei mit den heissen Abgasen in Kontakt treten.

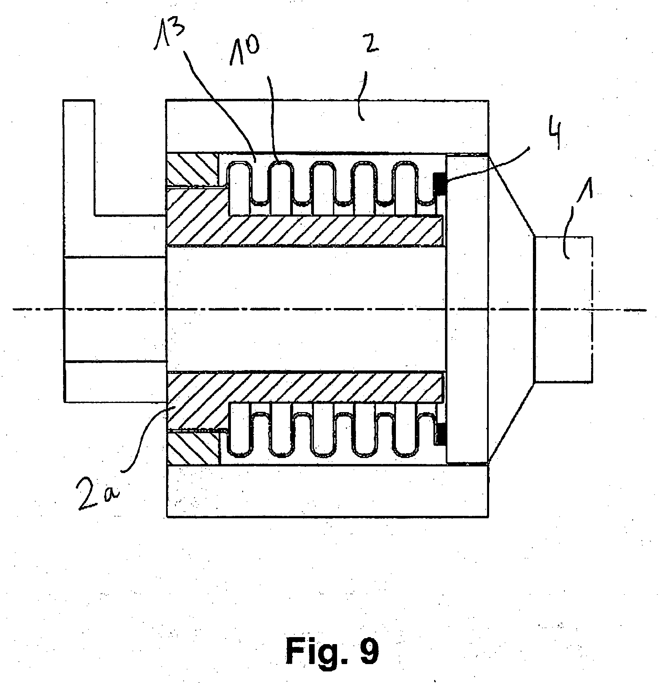

Fig. 9 zeigt eine Drehdurchführung mit im Wesentlichen analogem Aufbau zur Drehdurchführung gemäß Fig. 8. Der Faltenbalg 10 ist in einem Ringspalt 13 aufgenommen, der vom Lager 2 ausgebildet wird. Der Faltenbalg 10 kann hierdurch nicht mit der Verstellwelle 1 in unmittelbaren Kontakt treten und wird dadurch vor Deformationen oder ähnlichen Beschädigungen geschützt. Des Weiteren ist eine an der Verstellwelle 1 anliegende Lagerhülse 2a durch den Faltenbalg 10 derart geschützt, dass er nicht mit heissen Abgasen in Kontakt tritt.

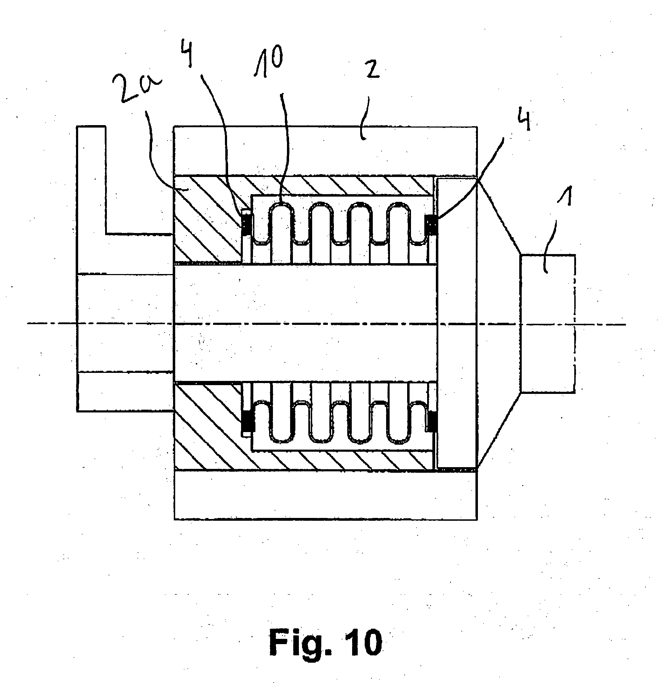

Fig. 10 zeigt eine Drehdurchführung mit einem Faltenbalg 10, der an seinen beiden Enden jeweils einen Dichtring aufweist. Der Faltenbalg 10 wird im Lager 2 als quasi loses Teil aufgenommen und durch die Verstellwelle 1 und das Lager 2 verpresst.

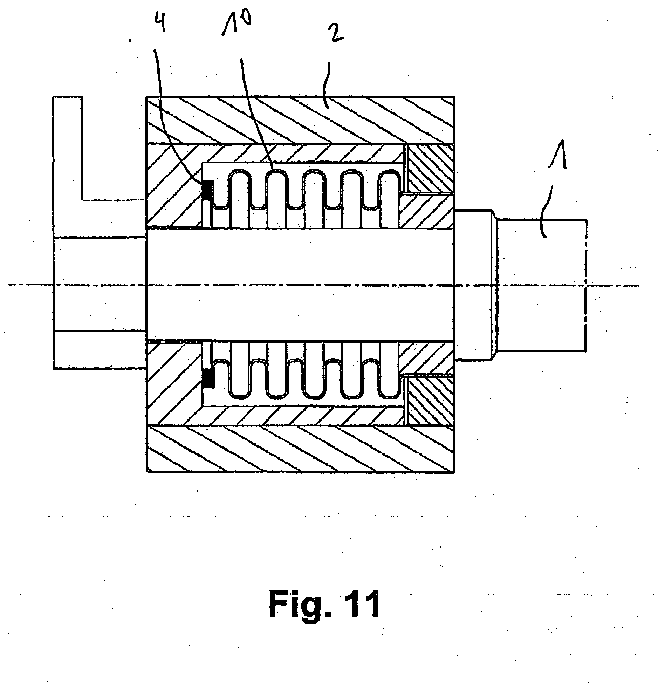

Fig. 11 zeigt eine Drehdurchführung mit einem Faltenbalg 10, welcher drehfest an der Verstellwelle 1 angeordnet ist. Der Dichtring ist an einem Ende des Faltenbalgs angeordnet, welches der kälteren Seite des Lagers 2 zugewandt ist.

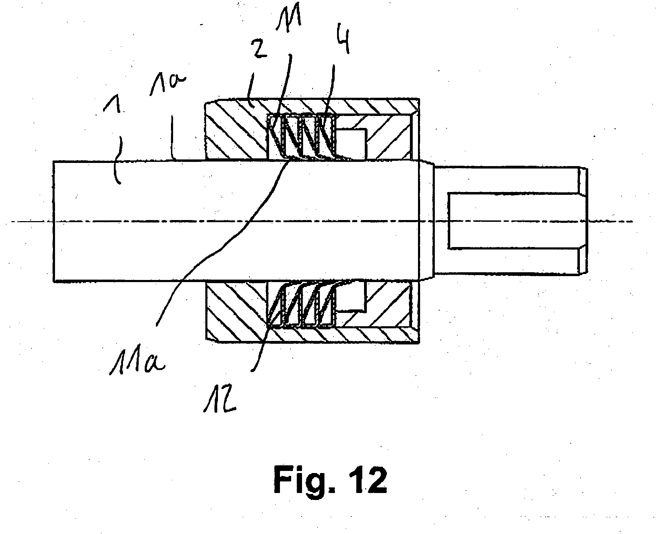

Fig. 12 zeigt eine erfindungsgemäße Drehdurchführung, bei welcher die Dichteinrichtung 4 aus Lamellen 11, 12 besteht. Die Dichteinrichtung 4 weist erste Lamellen 11 auf, welche im Querschnitt doppelt kegelstumpfförmig ausgebildet sind. Die Dichteinrichtung 4 weist zweite Lamellen 12 auf, die im Querschnitt U-förmig ausgebildet sind, wobei die Lamellen 11, 12 abwechselnd angeordnet sind. Die Lamellen 11, 12 umgreifen die Verstellwelle 1 und werden von der Verstellwelle 1 und dem Lager 2 verpresst. Dabei bildet ein Teil der Lamellen 11 Dichtlippen 11 a aus, welche an der Umfangsfläche 1a der Verstellwelle 1 anliegen.

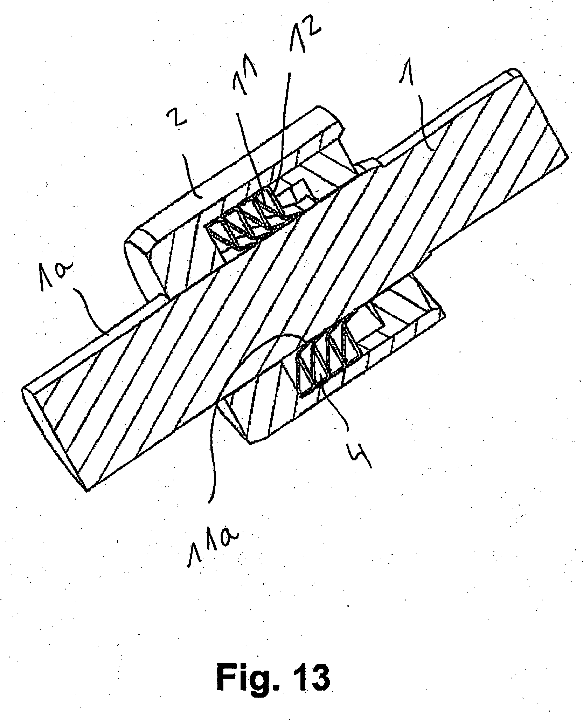

Fig. 13 zeigt eine perspektivische Ansicht der Drehdurchführung gemäß Fig. 12.

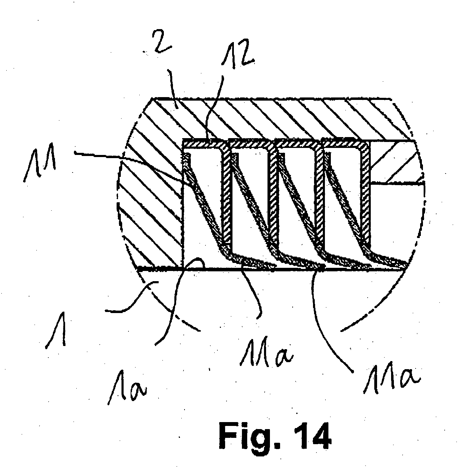

Fig. 14 zeigt eine Detailansicht der Dichteinrichtung 4 der Figuren 12 und 13. Man erkennt, dass Dichtlippen 11 a an der Umfangsfläche 1 a der Verstellwelle 1 mit ihren Spitzen dichtend anliegen.

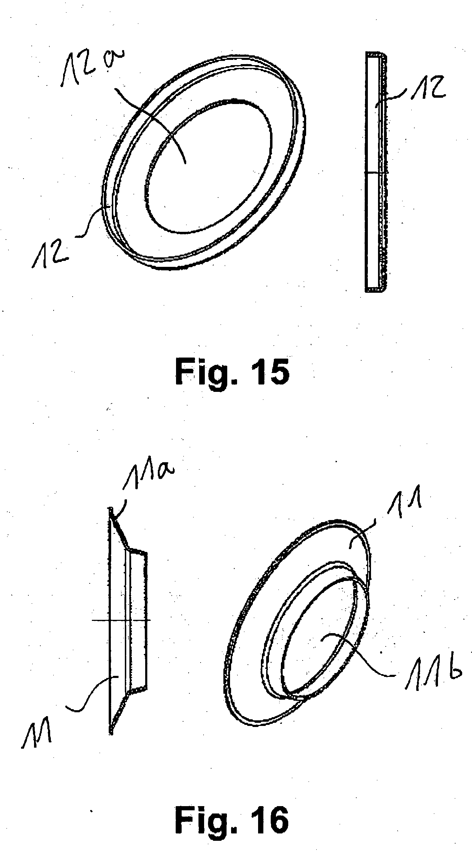

Fig. 15 zeigt eine perspektivische Ansicht einer zweiten Lamelle 12 und eine Seitenansicht der zweiten Lamelle 12. Es ist erkennbar, dass die zweite Lamelle 12 einen Durchgang 12a für die Verstellwelle 1 aufweist und im Querschnitt U-förmig ausgestaltet sind.

Fig. 16 zeigt eine Seitenansicht und eine perspektivische Ansicht einer ersten Lamelle 11, welche eine Dichtlippe 11a ausbildet. Die erste Lamelle 11 ist doppelt kegelstumpfförmig ausgebildet. Die erste Lamelle 11 weist einen Durchgang 11 b für die Verstellwelle auf.

Hinsichtlich weiterer vorteilhafter Ausgestaltungen und Weiterbildungen der Erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor ausgewählten Ausführungsbeispiele lediglich zur Erörterung der erfindungsgemäßen Lehre dienen, diese jedoch nicht auf diese Ausführungsbeispiele einschränkt.

## Patentansprüche

1. Drehdurchführung, umfassend eine Verstellwelle (1) welche mit einer Betätigungseinreichtung (14) kraftübertragend verbunden ist, wobei die Verstellwelle (1) in einem Lager (2) gelagert ist, wobei zwischen dem Lager (2) und der Verstellwelle (1) mindestens ein abzudichtender Spalt (3) ausgebildet ist und wobei der abzudichtende Spalt (3) durch mindestens eine Dichteinrichtung (4) abgedichtet ist, die innerhalb des Lagers (2) gekapselt aufgenommen ist,
**dadurch gekennzeichnet, dass** die Dichteinrichtung (4) Lamellen (11, 12) aufweist, die in Reihe angeordnet sind, wobei die Dichteinrichtung (4) erste Lamellen (11) aufweist, die im Querschnitt doppelt kegelstumpfförmig ausgebildet sind, und zweite Lamellen (12) aufweist, die im Querschnitt U-förmig ausgebildet sind, wobei die Lamellen (11, 12) abwechselnd angeordnet sind, wobei die Lamellen (11, 12) die Verstellwelle (1) umgreifen und von der Verstellwelle (1) und dem Lager (2) verpresst sind und wobei ein Teil der Lamellen (11) Dichtlippen (11a) ausbildet.

2. Drehdurchführung nach Anspruch 1, **dadurch gekennzeichnet, dass** die Dichteinrichtung (4) federnde Eigenschaften zeigt.

3. Drehdurchführung nach Anspruch 1 oder 2, **dadurch gekennzeichnet, dass** die Dichteinrichtung (4) einen zumindest teilweise aus mineralischen Stoffen bestehenden Vliesstoff aufweist.

4. Drehdurchführung nach einem der Ansprüche 1 bis 3, **dadurch gekennzeichnet, dass** die Dichteinrichtung (4) einen Vliesstoff aufweist, der mit Bornitrid imprägniert ist.

5. Drehdurchführung nach einem der voranstehenden Ansprüche, **dadurch gekennzeichnet, dass** zumindest einige Lamellen (11, 12) aus Vliesstoff bestehen und/ oder mit Bomitrid getränkt sind.

## Claims

1. Rotary feedthrough, comprising an adjusting shaft (1) connected to an actuating device (14) for power transmission, wherein the adjusting shaft (1) is mounted in a bearing (2), wherein at least one gap (3) to be sealed is formed between the bearing (2) and the adjusting shaft (1) and wherein the gap (3) to be sealed is sealed by at least one sealing device (4) accommodated within the bearing (2) in an encapsulated manner, **characterized in that** the sealing device (4) has fins (11, 12) arranged in a row, wherein the sealing device (4) has first fins (11) designed in cross section to be in the shape of a double truncated cone and has second fins (12) designed to be U-shaped in cross section, wherein the fins (11, 12) are arranged alternatingly, wherein the fins (11, 12) engage around the adjusting shaft (1) and are pressed in by the adjusting shaft (1) and the bearing (2) and wherein some of the fins (11) form sealing lips (11a).

2. Rotary feedthrough as defined in claim 1, **characterized in that** the sealing device (4) displays spring-like qualities.

3. Rotary feedthrough as defined in claim 1 or 2, **characterized in that** the sealing device (4) has a non-woven fabric consisting at least partially of mineral materials.

4. Rotary feedthrough as defined in any one of claims 1 to 3, **characterized in that** the sealing device (4) has a non-woven fabric impregnated with boron nitride.

5. Rotary feedthrough as defined in any one of the preceding claims, **characterized in that** at least some of the fins (11, 12) consist of a non-woven fabric and/or are soaked in boron nitride.

## Revendications

1. Passage rotatif, comprenant un arbre d'ajustement (1), qui est relié de manière à transmettre une force à un dispositif d'actionnement (14), l'arbre d'ajustement (1) étant monté dans un palier (2), au moins une fente (3) à étanchéifier étant réalisée entre le palier (2) et l'arbre d'ajustement (1) et la fente (3) à étanchéifier étant rendue étanche par au moins un dispositif d'étanchéité (4), qui est logé de manière encapsulée à l'intérieur du palier (2),
**caractérisé en ce que** le dispositif d'étanchéité (4) présente des lamelles (11, 12), qui sont disposées en rangée, le dispositif d'étanchéité (4) présentant des premières lamelles (11), qui sont réalisées de manière à présenter une forme de cône tronqué de manière doublée dans la section transversale, et présentant des deuxièmes lamelles (12), qui sont réalisées de manière à présenter une forme de U dans la section transversale, les lamelles (11, 12) étant disposées en alternance, les lamelles (11, 12) entourant l'arbre d'ajustement (1) et étant pressées par l'arbre d'ajustement (1) et par le palier (2) et une partie des lamelles (11) formant des lèvres d'étanchéité (11a).

2. Passage rotatif selon la revendication 1, **caractérisé en ce que** le dispositif d'étanchéité (4) affiche des propriétés élastiques.

3. Passage rotatif selon la revendication 1 ou 2, **caractérisé en ce que** le dispositif d'étanchéité (4) présente un tissu non-tissé constitué au moins en partie de matériaux minéraux.

4. Passage rotatif selon l'une quelconque des revendications 1 à 3, **caractérisé en ce que** le dispositif d'étanchéité (4) présente un tissu non-tissé, qui est imprégné de nitrure de bore.

5. Passage rotatif selon l'une quelconque des revendications précédentes, **caractérisé en ce qu'**au moins quelques lamelles (11, 12) sont constituées d'un tissu non-tissé et/ou sont imbibées de nitrure de bore.
